# EUROPEAN PATENT APPLICATION

(11) **EP 4 470 847 A1**
(43) Date of publication of application: **04.12.2024**
(21) Application number: 23176868.0
(22) Date of filing: 01.06.2023
(51) Int. Cl.: B60R 21/00, B60T 8/32, B60T 8/172

(54) **METHOD CONFIGURED FOR CONTROLLING A BRAKE PEDAL SYSTEM OF A VEHICLE IN A VEHICLE CRASH SITUATION**

(71) Applicant: Volvo Car Corporation, 405 31 Göteborg (SE)
(72) Inventor: KAPOCS, Marcel, 40531 Göteborg (SE); JOHNSSON, Ulrika, 40531 Göteborg (SE)
(74) Representative: Maiwald GmbH

(57) **Abstract**

The disclosure relates to a method (100) configured for controlling a brake pedal system (10) of a vehicle (1) in a vehicle crash situation, a brake pedal system (10) of a vehicle (1), a vehicle (1), comprising the brake pedal system (10), a data processing apparatus (50) associated with the method (100) and a computer program product associated with the method (100).

## Description

The present disclosure relates to a method configured for controlling a brake pedal system of a vehicle in a vehicle crash situation, a brake pedal system of a vehicle, a vehicle, comprising the brake pedal system, a data processing apparatus associated with the method and a computer program product associated with the method.

For vehicle crash situations, modem vehicles comprise several systems to protect the passengers from injuries, such as airbag systems and release systems of a brake pedal system of the vehicle. However, specifically the known release systems of the brake pedal system are very cost-intensive. This makes it difficult to provide such systems in low-priced vehicles.

The above problem is at least partially solved or alleviated by the subject matter of the independent claims of the present disclosure, wherein further examples are incorporated in the dependent claims.

According to a first aspect of this disclosure, there is provided a method configured for controlling a brake pedal system of a vehicle in a vehicle crash situation, the brake pedal system comprising a pedal arm and a modulation unit, the method comprising:
- receiving a first signal indicative of a detection of a vehicle crash situation, and
- providing a second signal indicative of a force to be applied from the modulation unit onto the pedal arm based on the first signal.

By means of basing the force to be applied from the modulation unit onto the pedal arm on the first signal, which is indicative of the detection of the vehicle crash situation, the force may be adapted such that the risk of an injury of the driver of the vehicle may be reduced as far as possible.

Specifically, before a vehicle crashes, typically, the driver will press the pedal of the brake pedal system as much as possible to decelerate the vehicle and prevent a crash, in particular a front crash. In the alternative, even if the driver would not press the pedal of the brake pedal system, he may be forced with his leg onto the brake pedal due to crash forces. However, the modulation unit of the brake pedal system will typically modulate the force applied from the modulation unit onto the pedal arm such that the force is increased. This means that the harder the driver presses the pedal of the pedal arm, the more force will be applied from the modulation unit against his leg. While this pedal feeling is desired in normal driving situations to give feedback to the driver on how much braking force he is currently applying, in a crash situation, this pedal feeling may pose a risk of injury. In particular, the force applied from the modulation unit onto the pedal arm may reach up to 1.500 N or more. When the vehicle crashes and the leg is further pressed against the pedal as a result thereof, the pedal arm is very stiff and can only give little or no more way to the leg of the driver pressing the pedal. Therefore, the high force F from the modulation unit is transmitted onto the leg and the spine of the driver, thereby possibly injuring the driver.

The method of this disclosure provides for providing a second signal indicative of the force to be applied from the modulation unit onto the pedal arm, wherein the second signal is based on the first signal. This means that the force applied from the modulation unit onto the pedal arm is based on the detected vehicle crash situation and, in particular, not on the normal driving situation anymore, in which the force of the modulation unit is being increased with increased pressing of the pedal from the driver.

Accordingly, for example, the second signal may be configured for or associated with deactivating a previous mode of the modulation unit, which in particular may be associated with a correlation between the force applied from the modulation unit and a pedal position of the pedal arm, which may be influenced by the driver by pressing the pedal of the pedal arm. Further, for example, the second signal may be configured for or associated with a new mode of the modulation unit. In the new mode, the force may be chosen or adapted so as to limit the risk of injury of the driver.

The method of the first aspect may in particular be a computer implemented method. This means that at least one, multiple or all of the steps of the method may be carried out by one or more computers or data processing apparatus. The one or more computers or data processing apparatus may be configured as or provided inside of one more control units of the vehicle. These control units may also be configured to carry out other control operations than described by the method according to the first aspect.

In an example, the force indicated by the second signal may be reduced compared to a force applied from the modulation unit onto the pedal arm when the first signal is received. In other words, the force applied from the modulation unit may be reduced immediately after crash impact, in particular compared to the force at and/or before crash impact, thereby reducing the stiffness of the pedal arm and giving way to the leg of the driver. As a consequence, the driver can push the pedal arm further with less resistance from the pedal arm based on the force applied from the modulation unit, the possibly harming force transmitted onto the leg thereby being reduced.

In an example, the force indicated by the second signal may be predetermined. In particular, the second signal may comprise the predetermined force. By predetermining the force to be applied by the modulation unit, the force may be chosen such that the risk of injury is reduced as far as possible.

In an example, the force is predetermined within a range of 50 N to 400 N, in particular within a range of 100 N to 300 N. This range has been found to be both, significantly reducing the injury risk and technically realizable given the short time frame in which the force must be reduced to have the injury risk reducing effect during the vehicle crash situation.

In an example, the second signal is indicative at least of a force applied from a pedal feel simulator of the modulation unit onto the pedal arm. Accordingly, the modulation unit may comprise a pedal feel simulator, the force from which is applied onto the pedal arm, may be indicated by the second signal. This force, which may be part of the entire force of the modulation unit applied onto the pedal arm, may be reduced. The pedal feel simulator may in particular be used in brake pedal systems based on a brake-by-wire system. The pedal feel simulator may give an additional force coupling in between the pedal and the wheel brakes to simulate the brake pedal feel in traditional brake pedal systems without brake-by-wire system.

In an example, the second signal may be indicative of at least of a force applied from a hydraulic brake arrangement of the modulation unit onto the pedal arm. Accordingly, the modulation unit may comprise a hydraulic brake arrangement, the force from which is applied onto the pedal arm, may be indicated by the second signal. This force, which may be part of the entire force of the modulation unit applied onto the pedal arm, may be reduced. The hydraulic brake arrangement may comprise an arrangement or network of fluid paths for a hydraulic fluid contained therein and one or more valves for controlling the flow direction and/or flow rate of the hydraulic fluid, in particular to different parts or systems of the vehicle, such as the wheel brakes of the vehicle.

In an example, the second signal may be associated with a control of at least one valve of a hydraulic brake arrangement of the modulation unit. By controlling the at least one valve of the hydraulic brake arrangement, the flow direction and/or flow rate of the hydraulic fluid in the hydraulic brake arrangement may be changed so as to reduce the force applied from the modulation unit in a sufficiently quick and easy manner.

In an example, the control of the at least one valve of the hydraulic brake arrangement may be associated with a redirection of hydraulic fluid inside the hydraulic brake arrangement. In particular, the hydraulic fluid may be redirected from the wheel brakes to one or more other portions of the hydraulic brake arrangement such that the force applied from the modulation unit onto the pedal arm is reduced.

In an example, the control of the at least one valve of the hydraulic brake arrangement may be associated with a reduced flow of hydraulic fluid from the hydraulic brake arrangement to at least one wheel brake of the vehicle. Thereby, the force applied from the modulation unit onto the pedal arm may be effectively reduced.

In an example, the method may further comprise reducing a force applied from the modulation unit onto the pedal arm by applying the force indicated by the second signal, by means of the modulation unit, onto the pedal arm.

In an example, the method may further comprise detecting, by means of a crash sensor of the vehicle, the vehicle crash situation.

According to a second aspect, there is provided a brake pedal system of a vehicle, the brake pedal system comprising a pedal arm and a modulation unit, and the brake pedal system being configured for carrying out the method according to the first aspect of this disclosure.

The brake pedal system, in particular the modulation unit, may comprise a corresponding control unit or data processing apparatus for carrying out the method according to the first aspect of this disclosure. The provided second signal may be received at the modulation unit and consequently, an operation corresponding to the second signal may be carried out, i.e., the force indicated by the second signal, may be applied by the modulation unit onto the pedal arm.

In an example, the brake pedal system may further comprise a pedal connected to the pedal arm. Also, the brake pedal system may comprise a rod element connected to the pedal arm. The modulation unit may be connected to the rod element. And, the modulation unit may be configured to apply the force from the modulation unit onto the pedal arm by means of the rod element. Accordingly, the force applied from the modulation unit onto the pedal arm may be directly applied onto the rod element, and therefrom be transmitted to the pedal arm, onto which it is indirectly applied from the modulation unit.

According to a third aspect of this disclosure, there is provided a vehicle, comprising the brake pedal system of the second aspect of this disclosure.

According to a third aspect of this disclosure, there is provided a data processing apparatus, the data processing apparatus comprising means for carrying out the method of the first aspect of this disclosure, as far as it relates to steps, which may be computer-implemented.

According to a fourth aspect of this disclosure, there is provided a computer program product comprising instructions which, when the program is executed by a computer, cause the computer to carry out the method according to the first aspect of this disclosure, as far as it relates to steps, which may be computer-implemented.

The computer program product may be a computer program as such, meaning a computer program consisting of or comprising a program code to be executed by the computer. Alternatively, the computer program product may be a product such as a data storage, on which the computer program is temporarily or permanently stored.

It is noted that the above aspects, examples and features may be combined with each other irrespective of the aspect involved.

The above and other aspects of the present disclosure will become apparent from and elucidated with reference to the examples described hereinafter.

Examples of the disclosure will be described in the following with reference to the following drawings illustrating representations of
- Fig. 1: a vehicle comprising a brake pedal system on crash impact of a vehicle crash situation, where the driver of the vehicle presses the pedal of the brake pedal system,
- Fig. 2: the vehicle in the vehicle crash situation of Fig. 1, where the airbags of the vehicle are activated,
- Fig. 3: the vehicle of Fig. 1 in a crash situation, where the driver of the vehicle does not press the brake pedal, and
- Fig. 4: a method configured for controlling the brake pedal system of the vehicle in the crash situation as illustrated in Fig. 2 or 3.

The figures are merely schematic representations and serve only to illustrate examples of the disclosure. Identical or equivalent elements are in principle provided with the same reference signs.

The designation of steps as first, second, etc. as provided herein is merely intended to make the methods and their steps referenceable and distinguishable from one another. By no means does the designation of methods and steps constitute a limitation of the scope of this disclosure. For example, when this disclosure describes a third step of a method, a first or second step of the method do not need to be present yet alone be performed before the third step unless they are explicitly referred to as being required per se or before the third step. Moreover, the presentation of steps in a certain order is merely intended to facilitate one example of this disclosure and by no means constitutes a limitation of the scope of this disclosure. Generally, unless no explicitly required order is being mentioned, the steps may be carried out in any feasible order.

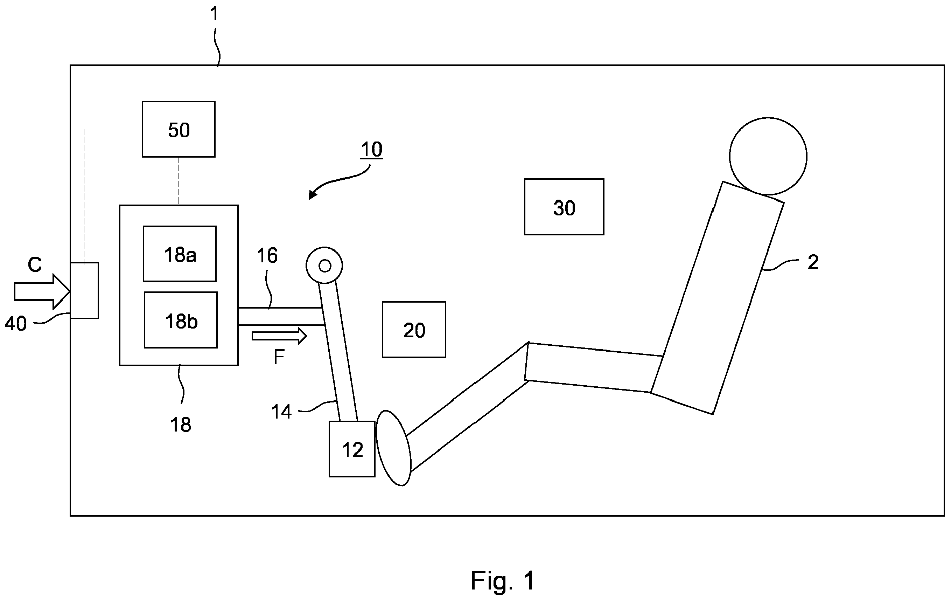

Figure 1 schematically illustrates a vehicle 1 having a brake pedal system 10. The brake pedal system 10 comprises a pedal 12, which may have or consist of a pedal pad. The pedal 12 is designed for being pressed by means of a foot of a driver 2 of the vehicle 1.

The brake pedal system 10 further comprises a pedal arm 14, which is connected or, in other words, attached to the pedal 12. The pedal arm 14 is rotatably suspended. The brake pedal system 10 further comprises a rod element 16 and a modulation unit 18 for modulating the braking force of the brake pedal system 10. The rod element 16 is connected to the pedal arm 14 and the modulation unit 18, thereby connecting the pedal arm 14 and the modulation unit 18 with each other.

For operation of the brake pedal system 10, the driver 2 may press the pedal 12, thereby rotating the pedal arm 14 around the axis of rotation provided at its suspension, pushing the pedal 12 away from himself and pushing the rod element 16 inside the modulation unit 18. The pushing of the rod element 16 may be registered by a pedal feel simulator 18a, a hydraulic brake arrangement 18b and/or other means of the modulation unit 18. In particular, a hydraulic fluid of the hydraulic brake arrangement 18b may be pushed towards the wheel brakes (not depicted) of the vehicle 1, thereby pressing the wheel brakes.

As shown in Fig. 1, the modulation unit 18, by means of the pedal feel simulator 18a and/or the hydraulic brake arrangement 18b, for example, applies a force F against the pedal arm 14. The force F provided from the modulation unit 18 is opposed to the force applied by the driver 2 onto the pedal 12 when pressing the pedal 12. The force F provided by the modulation unit 18 thus creates a pedal feel, wherein the force F may become larger the more the pedal 12 is pressed. The force F is applied to the pedal arm 14 via the rod element 16, where the force from the modulation unit 18 is directly applied to and from there indirectly applied to, or, in other words, transmitted, via the rod element 16, to the pedal arm 14 and the pedal 12.

While under normal operation, the brake pedal system 10 is working very well and intuitively for the driver 2 such that more pressure on the pedal 12 from the driver 2 correlates to more braking force on the wheel brakes, in a vehicle crash situation, the increasing or increased force F from the modulation unit 18 may be pose a risk of injury to the driver 2 and/or certain interior components of the vehicle 1, such as an airbag system, in particular a knee airbag system 20.

Fig. 1 corresponds to a vehicle crash situation at crash impact. The vehicle crash situation occurs when the vehicle 1 crashes, which is indicated herein by a force arrow denominated C for crash. The crash C of this example is a frontal crash. In this example, a crash sensor 40 detects the vehicle crash situation. The crash sensor 40 may be pressure-sensitive, for example, and located at a front of the vehicle 1, for example. Other and/or alternative types of crash sensors 40 may as well be used to detect the vehicle crash situation.

Before a vehicle crashes, the driver 2 of that vehicle 1 will typically try to decelerate the vehicle 1 as much as possible and therefore press the pedal 12 of the brake pedal system 10 as strong as possible. Also, due to crash forces pushing the driver 2 towards the brake pedal system 10, the leg of the driver 2 may be further pressed onto the pedal 12. However, the modulation unit 18 will increase the force F with further travel of the pedal arm 14 associated with the pressing by the driver 2. The pedal arm 14 therefore becomes very stiff and there is no path for the leg of the driver 2 to travel any further when the vehicle 1 crashes. This poses a severe risk of injury for the driver 2, specifically his leg and spine.

At impact of the vehicle crash situation depicted in Fig. 1, the driver 2 may have pressed the pedal 12 of the brake pedal system 10, thereby trying to brake the vehicle 1 as much as possible. Also, after impact, the pressing of the pedal 12 may even be greater, as explained above. This may result in a force F applied from the modulation unit 18 onto the pedal 12 of up to 3.000 N, which is further transmitted to the leg of the driver 2.

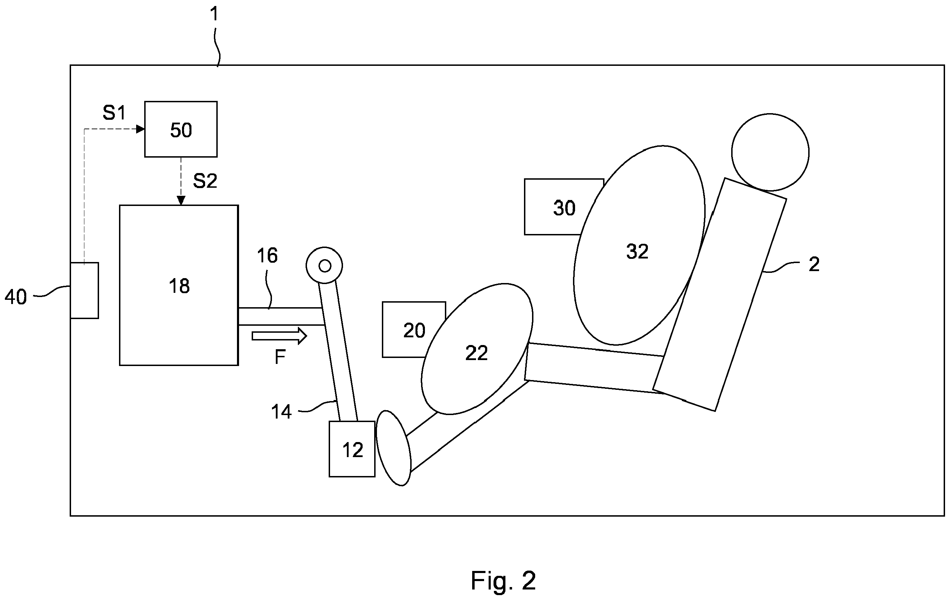

To avoid the risk of the driver 2 injuring his leg due to the high force F, the force F is reduced by the modulation unit 18 after detection of the vehicle crash situation as shown in Fig. 2, which corresponds to a time of the vehicle crash situation, where airbags 22, 32 are being deployed or have been deployed, e.g., 5 ms after impact. In this example, a knee airbag 22 is being deployed from a knee airbag system 20 or unit and a steering wheel airbag 32 is being deployed from a steering wheel system 30 or unit. For example, the previously or after deployment of the airbags 22, 32 reached force F of up to 3.000 N, e.g., 10 ms after impact, may be reduced to a force F of merely 300 N or less, thereby significantly reducing the stiffness of the pedal arm 14 and allowing the leg of the driver 2 to travel further against the force F, reducing the risk that his leg gets injured.

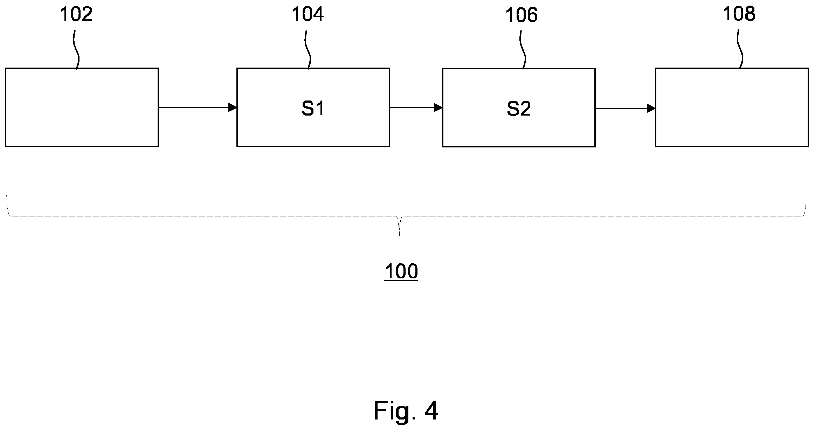

For the force F of the modulation unit 18 to be lowered, the vehicle 1 comprises a data processing apparatus 50. The data processing apparatus 50 may comprise a computer readable storage medium (not depicted), which may have a computer program stored thereon. When the computer program is executed by means of the data processing apparatus 50, the method 100 as shown in Fig. 4 may be executed.

For the first step 102 of method 100, the vehicle 1 is subjected to the crash C, the crash sensor 40 sensing the impact of the crash C, which corresponds to the situation of Fig. 1. Thereby, the vehicle crash situation is detected.

As a result of the detection of the vehicle crash situation, the crash sensor 40 in the first step 102 directly or, via another unit, sends a first signal S1 to the data processing apparatus 50, as shown in Fig. 1. The first signal S1 is indicative of the detection of the vehicle crash situation.

The first signal S1 is received by the data processing apparatus 50 in a second step 104 of the method 100. The data processing apparatus 50 may be a control unit of the vehicle 1 or the brake pedal system 10, for example.

Based on the first signal S 1, in a third step 106 of the method 100, a second signal S2 indicative of a force F to be applied from the modulation unit 18 onto the rod element 16 and thereby onto the pedal arm 14 is provided. This provision of the second signal S2 may, in particular, be a generation of the second signal S2 and/or providing for, in particular sending to, the modulation unit 18 or a control unit thereof or of the brake pedal system 10.

Both signals S1 and S2 may be in the form of information, such as a notice of a vehicle crash situation and the force F to be applied from the modulation unit 18 onto the pedal arm 14, and/or in the form of control instructions, e.g., the first signal S1 instructing the providing of the second signal S2 and the second signal S2 providing specific control measures for the modulation unit 18 on how to achieve the force F.

In a fourth step 108, the force F according to the second signal S2 is being applied by the modulation unit 18 onto the rod element 16 and therethrough onto the pedal arm 14 and the pedal 12. The force F after crash impact, e.g., after 5 or 10 ms or in Fig. 2, is reduced compared to a force F that was applied at crash impact, e.g., at 0 ms or in Fig. 1, where the vehicle crash situation was just noticed but no measure has been yet taken to reduce the force F. The force F may be predetermined by the second signal S2. For example, the data processing apparatus 50 may predetermine the force F to be in the range of 50 N to 600 N, in particular 300 N or less, for example, as noted above.

To reduce the force F by modulation via the modulation unit 18, both, a force applied from the pedal feel simulator 18a and a force applied from the hydraulic brake arrangement 18b of the modulation unit 18 onto the pedal arm 14 may be reduced. For this purpose, the second signal S2 may be associated with a control of one or more valves (not depicted) in the hydraulic brake arrangement 18b. Specifically, a hydraulic fluid, in particular hydraulic brake fluid, inside the hydraulic brake arrangement 18b may be redirected away from the wheel brakes of the vehicle 1 to at least one other portion of the hydraulic brake arrangement 18b by closing and opening corresponding valves inside the hydraulic brake arrangement 18b.

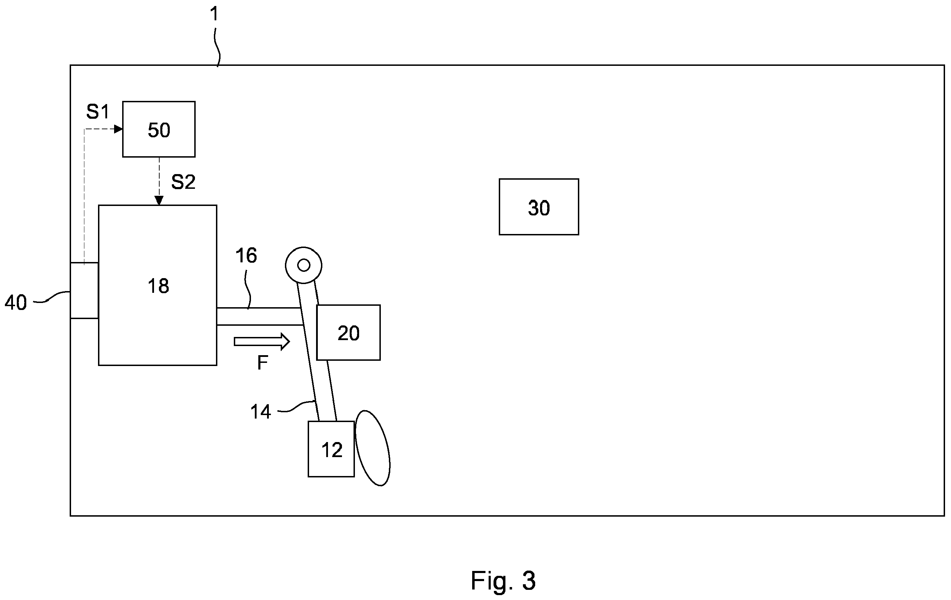

Figure 3 shows the vehicle 1 in the vehicle crash situation of Fig. 2 but without the driver 2 pressing the pedal 12 of the brake pedal system 10. Fig. 3 may correspond to a later time in the vehicle crash situation, e.g., at 25 to 40 ms, for example. Even in this scenario, the method 100 has great advantages. Specifically, when the vehicle 1 comprises interior components close to the brake pedal system 10, such as the depicted knee airbag system 20, the method 100 may prevent such interior components from being damaged as a result of the crash C.

As shown in Fig. 3, due to the crash C, the front of the vehicle 1 is compressed, thereby pushing the brake pedal system 10 towards the knee airbag system 20. When the pedal arm 14 is stiff due to a high force F applied thereon by the modulation unit 18, the pedal arm 14 cannot give way or at least less way to the knee airbag system 20. Accordingly, the knee airbag system 20 may be damaged in the process due to the high force F being transmitted over to the knee airbag system 20.

However, when the force F is reduced by the method 100 as explained herein, the knee airbag system 20 can be given more way by pressing the pedal arm 14 similar to when the leg of the driver 2 presses the pedal 12. Accordingly, depending on the severity of the vehicle crash situation, it is more likely that the knee airbag system 20 stays in contact, when the method 100 is being executed. This makes a repair of the crashed vehicle 1 more cost-effective.

Other variations to the disclosed examples can be understood and effected by those skilled in the art in practicing the claimed disclosure, from the study of the drawings, the disclosure, and the appended claims. In the claims the word "comprising" or "having" does not exclude other elements or steps and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope of the claims.

### LIST OF REFERENCE SIGNS

- 1: vehicle
- 2: driver
- 10: brake pedal system
- 12: pedal
- 14: pedal arm
- 16: rod element
- 18: modulation unit
- 18a: pedal feel simulator
- 18b: hydraulic brake arrangement
- 20: knee airbag system
- 22: knee airbag
- 30: steering wheel system
- 32: steering wheel airbag
- 40: crash sensor
- 50: data processing apparatus
- 100: method
- 102-108: steps
- C: crash
- F: force
- S1: first signal
- S2: second signal

## Claims

1. A method (100) configured for controlling a brake pedal system (10) of a vehicle (1) in a vehicle crash situation, the brake pedal system (10) comprising a pedal arm (14) and a modulation unit (18), the method (100) comprising:
- receiving a first signal (S1) indicative of a detection of a vehicle crash situation, and
- providing a second signal (S2) indicative of a force (F) to be applied from the modulation unit (18) onto the pedal arm (14) based on the first signal (S1).

2. The method (100) according to claim 1, wherein the force (F) indicated by the second signal (S2) is reduced compared to a force (F) applied from the modulation unit (18) onto the pedal arm (14) when the first signal (S1) is received.

3. The method (100) according to claim 1 or 2, wherein the force (F) indicated by the second signal (S2) is predetermined.

4. The method (100) according to claim 3, wherein the force (F) is predetermined within a range of 50 N to 400 N.

5. The method (100) according to any of the preceding claims, wherein the second signal (S2) is indicative at least of a force applied from a pedal feel simulator (18a) of the modulation unit (18) onto the pedal arm (14).

6. The method (100) according to any of the preceding claims, wherein the second signal (S2) is indicative of at least of a force applied from a hydraulic brake arrangement (18b) of the modulation unit (18) onto the pedal arm (14).

7. The method (100) according to any of the preceding claims, wherein the second signal (S2) is associated with a control of at least one valve of a hydraulic brake arrangement (18b) of the modulation unit (18).

8. The method (100) according to claim 7, wherein the control of the at least one valve of the hydraulic brake arrangement (18b) is associated with a redirection of hydraulic fluid inside the hydraulic brake arrangement (18b).

9. The method (100) according to claim 7 or 8, wherein the control of the at least one valve of the hydraulic brake arrangement (18b) is associated with a reduced flow of hydraulic fluid from the hydraulic brake arrangement (18b) to at least one wheel brake of the vehicle (1).

10. The method (100) according to any of the previous claims, further comprising reducing a force (F) applied from the modulation unit (18) onto the pedal arm (14) by applying the force (F) indicated by the second signal (S2), by means of the modulation unit (18), onto the pedal arm (14).

11. A brake pedal system (10) of a vehicle (1), the brake pedal system (10) comprising a pedal arm (14) and a modulation unit (18), and the brake pedal system (10) being configured for carrying out the method (100) according to any of the previous claims.

12. The brake pedal system (10) according to claim 11, the brake pedal system (10) further comprising a pedal (12) connected to the pedal arm (14) and a rod element (16) connected to the pedal arm (14), the modulation unit (18) being connected to the rod element (16), the modulation unit (18) being configured to apply the force (F) from the modulation unit (18) onto the pedal arm (14) by means of the rod element (16).

13. A vehicle (1), comprising the brake pedal system (10) according to claim 11 or 12.

14. A data processing apparatus (50), the data processing apparatus (50) comprising means for carrying out the method of any of one claims 1 to 9.

15. A computer program product comprising instructions which, when the program is executed by a computer, cause the computer to carry out the method of any one of claims 1 to 9.
